# EUROPÄISCHE PATENTSCHRIFT

(11) **EP 1 324 077 B1**
(45) Veröffentlichungstag und Bekanntmachung des Hinweises auf die Patenterteilung: **08.08.2012**
(21) Anmeldenummer: 02027564.0
(22) Anmeldetag: 09.12.2002
(51) Int. Cl.: G01V 3/15, G01V 3/10

(54) **Verfahren und Vorrichtung zur Detektion von metallischen Objekten**
Method and device for detecting metal objects
Procédé et dispositif de détection des objets métalliques

(30) Priorität: 28.12.2001 DE 10164302
(43) Veröffentlichungstag der Anmeldung: 02.07.2003
(73) Patentinhaber: FIRMA ING. KLAUS EBINGER, D-51149 Köln (DE)
(72) Erfinder: Ebinger, Klaus, 51143 Köln (DE)
(74) Vertreter: Heim, Hans-Karl

(56) Entgegenhaltungen:
- EP-A- 0 212 324
- EP-A- 0 337 939
- US-A- 4 249 128
- US-A- 4 912 414
- US-A- 5 304 927
- US-A- 5 698 982

## Beschreibung

Die Erfindung betrifft ein Verfahren und eine Detektorvorrichtung gemäß Oberbegriff des Anspruches 1 bzw. des Anspruches 13.

Ein Verfahren und eine Vorrichtung dieser Art ist aus der EP 0 957 377 A1 bekannt.
Dieses aktive Verfahren zur Ortung von metallischen oder dielektrischen Objekten zeigt bereits verstellbare Suchspulen, so dass eine bessere Ankopplung zwischen Sende- und Empfangsspule im Hinblick auf die Unterdrückung von Störungen erreicht werden kann.

Ein weiteres aktives Verfahren und eine entsprechende Detektorvorrichtung sind in der nicht vorveröffentlichten Patentanmeldung 100 45 697.9 beschrieben.
Obwohl dieses zuletzt genannte Verfahren und die Vorrichtung erhebliche Verbesserungen bei der Ortung von Objekten ermöglichen und auch im Hinblick auf die Störunterdrückung verschiedenster Einflüsse ausgelegt sind, sind im Hinblick auf großflächige Detektorvorrichtungen und Sonden Verbesserungen wünschenswert.

Als verbesserungsbedürftig hat sich insbesondere herausgestellt, dass bei der Auslegung dieser Detektorvorrichtungen und Verfahren mit primärseitigen und/oder sekundärseitigen Schwingkreisen eine relativ hohe Temperaturabhängigkeit im Hinblick auf die Resonanzfrequenz bzw. auf die Amplitude der Resonanzfrequenz feststellbar ist. Mit der Änderung der Frequenz verändern sich aber auch die Phasenbedingungen, wobei auch diese dann ebenfalls einem größeren Driften aufgrund der Temperatur ausgesetzt sind.

Aus der US 5 698 982 ist ein Mehrfrequenzsystem zur Leitfähigkeitsmessung in einem Bohrloch bekannt. Bei dieser Bohrlochsonde wird versucht, mit Hilfe von komplexen Vor- und Nachbereitungen der Signale unerwünschte Störungen zu unterdrücken.

Die US 4 249 128 beschreibt ein ähnliches System, bei dem mittels der bekannten Samplingmethode versucht wird, derartige Störungen zu unterdrücken. Hierbei ist es besonders wichtig, eine entsprechende Signalform beim Aussenden sicherzustellen.

Eine weitere, speziell für den Unterwassereinsatz abgestimmte Spulenanordnung ist aus US 4 912 414 bekannt. Hierbei wird die Kompensation von Störungen durch eine äußerst komplexe Anordnung von Sende- und Empfangsspulen zueinander versucht. Außerdem wird das empfangene Signal einer weiteren Aufbereitung unterzogen, um Rauschen oder dergleichen zu unterdrücken.

Die EP 0 212 324 betrifft ein Verfahren zur berührungslosen Vermessung elektrisch leitfähiger Objekte. Der dort beschriebene Detektor arbeitet nach dem Wirbelstromverfahren, wobei mehrere Spulen im festen Abstand zueinander vorgesehen sind.

Aus der EP 0 337 939 ist ein Verfahren, welches mit einer empfängerseitigen Spannungskompensation arbeitet, bekannt. Hierzu ist es notwendig, die Spulen in einem fixen Verhältnis zueinander zu stabilisieren, um die Spannungskompensation durch eine entsprechende Anordnung der einzelnen Leiter realisieren zu können.

Ein weiterer stationärer Metalldetektor wird in US 5 304 927 beschrieben. Er dient zur Überprüfung von Nahrungsmitteln auf Metallgegenstände. Dieser Metalldetektor ist aus einem starren spannungskompensierenden Schleifensystem aufgebaut.

Der Erfindung liegt daher die **Aufgabe** zugrunde, ein Verfahren und eine Detektorvorrichtung so zu konzipieren, dass insbesondere bei großflächigen Detektoren die Temperaturabhängigkeit und das Driften vermieden und Störeinflüsse nach Möglichkeit unterdrückt werden können.

Diese Aufgabe wird verfahrens- und vorrichtungsgemäß gemäß der Erfindung mittels der Merkmale des Anspruchs 1 bzw. des Anspruch 12 gelöst.

Ein wesentlicher Kerngedanke der Erfindung ist hierbei, dass zumindest sekundärsseitig die Empfangsspule-unabgestimmt betrieben wird, also nicht in einem Schwingkreis. Besonders vorteilhaft ist es, wenn auch primärseitig die Sendespule ohne einen LC-Kreis, also unabgestimmt, betrieben wird, so dass bereits primärseitig ein Driften aufgrund geringer Temperatureinwirkungen weitgehend vermieden wird.

Diese prinzipielle Idee der Erfindung lässt sich bei sinus- oder pulsförmig betriebenen Verfahren, also mit kontinuierlichen oder gepulsten Wechselfeldern einsetzen. Bevorzugter Weise wird hierbei das primärseitig ausgesendete Signal niederohmig an die sekundärseitige, unabgestimmte Sendespule ausgekoppelt.

Die niederohmige Empfangsspule kann auch mit einem Transformator gekoppelt werden, der die sekundärseitig empfangende Wechselspannung hochtransformiert und selektiert. In diesem Fall kann die Empfangsspule auch als LC-Kreis geschaltet werden. Der Übertrager kann auch entfallen, wobei dann zur weiteren Aufbereitung des Sekundärsignales, z.B. aktive Filter, PLL-Schaltungen und dergleichen verwendet werden können.

Entsprechend der zugrundeliegenden Suchaufgabe, ob beispielsweise kleinere oder größere Objekte detektierte werden müssen, ob dies in relativ störbehafteten Böden oder im Wasser erfolgen soll, können die Sende- und Empfangsspule in beliebiger Dimension, Ausführung und Lage ausgebildet werden.
So kann die Detektorvorrichtung in einfacher Form nur mit einem Absolutkanal realisiert werden.
Unter Absolutkanal wird hierbei verstanden, dass entsprechend der Anmeldung 100 45 697.9 primärseitig und sekundärseitig jeweils z.B. ein Spannungssignal gewonnen wird, die dann z.B. über einen Summierer und einem nachfolgenden Synchrongleichrichter einer weiteren Auswertung in einem Datenlogger oder über einen Analog-Digital-Wandler einer nachfolgenden Auswertestufe zugeführt werden. Auch eine reine Phasenauswertung lässt sich bei einem derartigen Absolutkanal realisieren.

Anstelle eines Absolutkanals können auch mehrere Absolutkanäle vorgesehen werden, die auch im Sinne eine Differenzmessers miteinander zur Auswertung der Objektdetektion gekoppelt werden können. So können die zwei Signale der Absolutkanäle einem Differenzmesser zur weiteren Anzeige und Auswertung zugeführt werden.

Im Hinblick auf die thermische Stabilität der Detektorvorrichtung und den unabgestimmten Sekundärkreisen bzw. Empfangsspulen und/oder dem unabgestimmten Primärkreis mit der Sendespule sind verschiedene Möglichkeiten vorteilhaft.
So kann der Primärkreis spannungsgesteuert sein und als unabgestimmte Sendespule betrieben werden. Eine weitere zweckmäßige Möglichkeit ist primärseitig eine unabgestimmte Stromsteuerung, wobei die Sendespule mit einem relativ großen Wechselstrom beaufschlagt wird.
Denkbar ist auch, dass die Sendespule als Schwingkreis in Parallel- oder Serienschaltung betrieben wird.

Als besonders vorteilhaft hat sich der Betrieb der Empfängerspule im unabgestimmten Zustand erwiesen. Hierbei wird insbesondere die Stromsteuerung bevorzugt, so dass sich durch den niederohmigen Eingang das Rauschen, dielektrische Effekte und damit auch besondere Abschirmmaßnahmen sekundärseitig reduzieren bzw. vermeiden lassen. In einer weiteren Alternative kann der unabgestimmte Empfängereingang auch als Spannungseingang betrieben werden. Sofern daher die Empfangsspule niederohmig, also mit einem Stromeingang betrieben wird, kann man, je nach Betriebsfrequenz, sogar auf eine statische Abschirmung der Empfangsspule verzichten.
Auch ist in diesem Betrieb der Signalgewinn und die Störunterdrückung wesentlich größer als in anderer Betriebsart.

Die Detektorvorrichtung und das Verfahren eignen sich daher sowohl für großflächige Suchanordnungen als auch für die Tiefensondierung. In besonders vorteilhafter Weise werden dabei die Spulen bzw. Schleifen verstellbar bzw. verschiebbar angeordnet, wobei ein entkoppelter, aber auch ein unentkoppelter Betrieb möglich ist.

Bei Detektorvorrichtungen mit Kleinspulen bzw. Kleinschleifen kann die Auslegung auch in Multilayer-Technik, z.B. für Größen üblicher Minensuchgeräte realisiert werden.
Die Detektorvorrichtung kann daher sowohl für den Landeinsatz wie den Wassereinsatz ausgelegt sein, wobei angepasste Suchfrequenzen vorzusehen sind.
Die Auswertung verschiedenster Antwortfrequenzen im Hinblick auf die charakteristischen Eigenschaften des Objektes sind weitgehend bekannt.
Andere Einsatzbereiche sind auch geophysikalische Untersuchungen, so dass die Detektorvorrichtung auch als Hohlraumdetektor bei Verwendung hoher bzw. geeigneter Betriebsfrequenzen eingesetzt werden kann.

Um speziell bei der Untersuchung größerer Flächenbereiche, ob auf Land oder im Wasser, ein sehr effizientes Ortungsverfahren durchführen zu können, ist ein Erfindungsgedanke, der auch eigenständig Bedeutung hat und realisiert werden kann, die Sende- und Empfangsspule bzw. Empfangsspulen geometrisch zu entkoppeln oder auch vorzuentkoppeln. Dies wird dadurch realisiert, dass der Basisabstand der Spulen veränderbar ist. Die Spulen können vorteilhafterweise in rechteckförmigen Rahmen vorgesehen werden, die auf einer Such- und Traganordnung relativ zueinander verschoben werden können. Hierbei ist geeigneterweise ein Überlappen bzw. Übereinanderschieben der Rahmen möglich, um den gewünschten Kopplungsgrad einstellen zu können.

Diese Realisierung lässt sich sowohl bei Relativmessern, die üblicherweise eine Sendespule und eine Empfangsspule aufweisen, verwirklichen.
Auch die Auslegung der Detektorvorrichtung als Differenzmesser ist möglich, wobei ein dritter Rahmen, der eine Empfangsspule aufweist, vorgesehen wird. In diesem Fall ist der mittlere Rahmen für die Sendespule bestimmt und die beiden äußeren Rahmen für die relativ zur Sendespule verschiebbaren Empfangsspulen.

Bei der Auslegung dieses Systems als Differenzmesser bilden die rechte und linke Seite mit den Empfangsspulen jeweils einen Suchkanal, dessen Detektionsergebnisse als relative Änderungen aufgenommen und weiterverarbeitet werden können. Zusätzlich kann man die Signale der beiden Suchkanäle subtrahieren, wodurch die Differenz zur Anzeige kommt. Sowohl das Differenzsignal als auch die relativen Signalwerte können mit üblicherweise digital arbeitenden Auswerteapparaturen im Hinblick auf spezifische Objektdaten weiterverarbeitet werden.

Insbesondere für bisher verwendete aktive Großflächen- und Tiefensondierungen nach einem Frequenzverfahren bietet die Erfindung mit der Einstellung der Ankopplung, insbesondere der Empfangsspulen an die zu ortenden Objekte, gravierende Vorteile. Für diese Suchaufgabe kann der Basisabstand zwischen den Spulen so variiert werden, dass Störeffekte unterdrückt werden und ein bestmögliches Objektsignal erhalten wird.

Unter Berücksichtigung dieser Aspekte hat die Erfindung erhebliche Vorteile gegenüber passiven Detektionsverfahren, bei denen auch magnetische Störungen aus dem Erdfeld bzw. von Schrott, Drähten oder magnetischen Steinen zu Fehlsignalen führen. In vergleichbarer Weise ist auch das Puls-Induktionsverfahren mit Großschleifen problematisch, da elektromagnetische Störungen, insbesondere Wechselfelder von Starkstromanlagen, aufgenommen werden können.

Eine wesentliche Funktion wird bei der Erfindung nicht nur durch die Dimension der Suchschleifen, sondern gerade durch deren Basisabstand zwischen den Sende- und den Empfangsspulen realisiert. Der Basisabstand bestimmt hierbei die Tiefenwirkung und den zu ortenden Objektbereich.

Bei einem engen Basisabstand kommen kleine bzw. mittelgroße Metallobjekte bevorzugt zur Anzeige. Wird der Basisabstand vergrößert, so erhöht sich die Ortungsreichweite, wobei gleichzeitig immer größere Suchobjekte für eine auswertbare Signalamplitude vorausgesetzt werden.

Besonders vorteilhaft im Hinblick auf die Entkopplung der Suchspulen bzw. deren Ankopplung an die zu ortenden Suchobjekte ist, dass die Detektorvorrichtung mit den in Rahmen vorgesehenen Suchspulen auf relativ großem Raum auseinandergezogen werden kann. Auf diese Weise werden unerwünschte Kleinteile nicht mehr erfasst. Andererseits kann die Detektorvorrichtung auf dem Wasser mit voller Breitseite geschleppt werden, wodurch in kurzer Zeit eine große Suchfläche abgedeckt werden kann.

Die Detektorvorrichtung und das Verfahren können daher auch mit einer Vielzahl von großen und kleinen Empfängerspulen als auch mit unterschiedlichen Basisabständen realisierte werden, so dass unterschiedliche, gewünschte Suchinformationen über zu detektierende Objekte ermittelt werden können.

Ein Vorteil des erfindungsgemäßen Verfahrens ist es, dass für die Metallortung vorzugsweise mit kontinuierlichen Wechselfeldern geringer Frequenz, z.B. Frequenzen unter 100 kHz, gearbeitet werden kann.
Wird die Betriebsfrequenz z.B. in den MHz-Bereich erhöht, so werden Leitfähigkeitssprünge, auch Hohlräume und andere Inhomogenitäten im Erdboden sichtbar. Auch für diesen Betriebsbereich gelten die gleichen Vorteile wie sie durch die Entkopplung der Suchspulen erreicht werden und sich im Hinblick auf Größe, Ausdehnung und Tiefe der Leitfähigkeitsänderungen bemerkbar machen.

Die bevorzugte geometrische Entkopplung der Detektorvorrichtung, wobei die Spulen und deren Rahmen teilweise überlappen, ist nicht für alle Anwendungsfälle notwendig. In Fällen, in denen man eine große Detektionsbreite erreichen will, können die Spulen auch auseinandergezogen werden, so dass eine lose Kopplung entsteht. Zum Beispiel ist insbesondere beim Wassereinsatz und bei der Suche nach Wracks, versunkenen Fahrzeugen oder anderen kompakten Metallgegenständen die große Detektionsbreite mit zeitlich reduziertem Suchvorgang bevorzugt.
Beim Wassereinsatz kann z.B. die Trag- und Suchanordnung auf einem oder zwei Schwimmkörpern in Art eines Katamarans geschleppt oder selbstfahrend installiert werden. Geeignet sind hierfür auch GFK-Boote, die der aktiven Suchtechnik entgegenkommen. Bei der Anordnung der Suchrahmen mit großem Basisabstand werden üblicherweise unerwünschte Kleinteile nicht mehr erfasst. Die Suchorientierung ist daher auf Großobjekte ausgerichtet.

Detektorvorrichtungen mit dem Entkopplungssystem der verstell- bzw. verschiebbaren Spulenrahmen können sowohl unentkoppelt wie auch entkoppelt und auch als Differenzmesser betrieben werden.
Beim Betrieb der Detektorvorrichtung mit zwei oder mehr Kanälen wird eine Rechts-/Links-Anzeige des zu detektierenden Objektes in Bezug auf die zentrale Suchspule auch in gestörter Umgebung erhalten, so dass präziser und auf engem Raum störungsfreier geortet werden kann. Die weitere Auslegung als Differenzmesser unterdrückt externe Störeinflüsse, so dass das Verfahren lokaler und konzentrierter ausgerichtet ist.

Die Erfindung wird nachfolgend anhand schematischer Zeichnungen noch näher dargestellt. Es zeigen:
- Fig. 1: ein Blockschaltbild des Grundprinzipes einer erfindungsgemäßen Detektorvorrichtung mit zwei Absolutkanälen;
- Fig. 2: das Blockschaltbild nach Fig. 1, jedoch mit entkoppelten Spulen;
- Fig. 3: eine schematische Darstellung einer Detektorvorrichtung nach Fig. 1 oder 2 mit einem Trag- bzw. Suchrahmen, auf dem die drei Spulen beabstandet zueinander vorgesehen sind;
- Fig. 4: den Tragrahmen nach Fig. 3, wobei die außenliegenden zwei Rahmen der Empfangsspulen die Sendespule im Sinne einer Entkopplung teilweise überdecken bzw. überlappen;
- Fig. 5: eine weitere Ausführungsform der Detektorvorrichtung als Relativmesser mit einem Traggestell für zwei Rahmen, wobei der Rahmen der Empfangsspule den Rahmen der Sendespule partiell überlappt;
- Fig. 6, 7, 8: alternative Betriebsweisen der Sendespule, und
- Fig. 9, 10: alternative Schaltungsweisen der Empfangsspule.

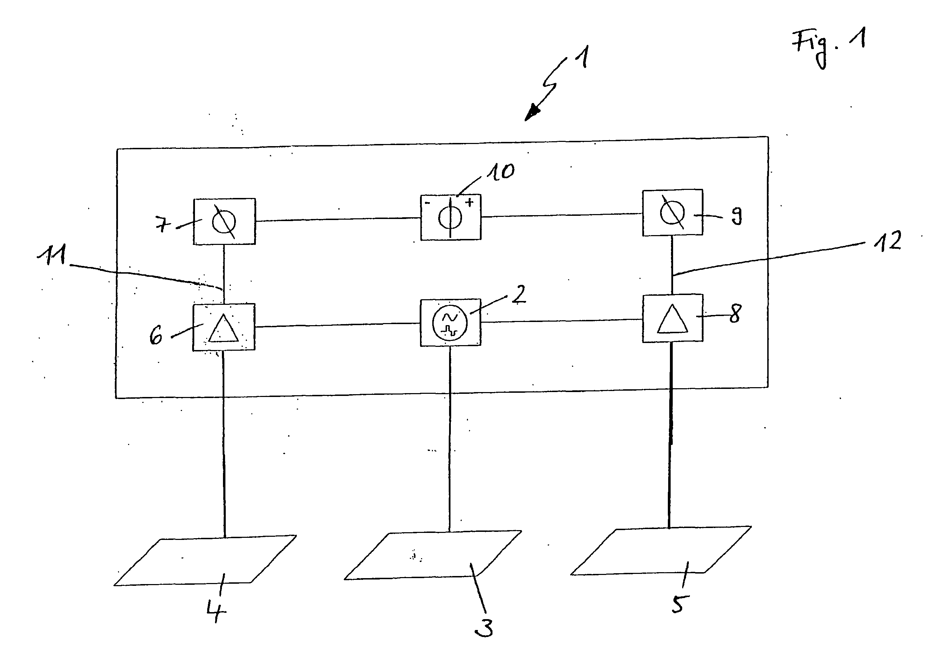

Das Blockschaltbild der Detektorvorrichtung 1 nach Fig. 1 weist einerseits einen Sender 2 auf, der mit einer sinusförmigen Wechselspannung oder einer gepulsten Wechselspannung eine Sendespule 3 zur Erzeugung des auszustrahlenden magnetischen Feldes beaufschlagt. Der Sender 2 bietet den Verstärkern 6 und 8 der beiden Kanäle 11, 12 eine Vergleichsspannung an. Diese Vergleichsspannung wird mit dem Empfangssignal der Spule 4 bzw. 5 verglichen und zur Auswertung einer Auswerteeinheit 7 bzw. 9 zugeleitet.
Im Beispiel nach Fig. 1 bildet daher die Empfangsspule 4, der Verstärker 6 und die Auswerteeinheit 7 einen ersten Absolutkanal 11, der die relative Leitfähigkeitsänderung zwischen der Sendespule 3 und der Empfangsspule 4 zur Anzeige und zur Objektauswertung bringt.
Der zweite Absolutkanal 12 wird durch die Empfangsspule 5, den Verstärker 8 und die nachgeschaltete Auswerteeeinheit 9 gebildet. Die Absolutkanäle 11 bzw. 12 bringen daher die relative elektrische Leitfähigkeitsänderung, die sich im Wirkungsbereich der Detektoranordnung 11 ergibt, zur Anzeige.

Wie in der Fig. 1 dargestellt, wird im Beispiel aus den beiden Absolutkanälen 11, 12 die Differenz der beiden Ortungssignale gebildet und im Differenzanzeiger 10 dargestellt.
Dies hat den Vorteil, dass die bedienende Person erkennen kann, wo und unter welcher Seite der Detektorvorrichtung das zu ortende Objekt überfahren bzw. detektiert wurde. Auch Wechselfeldstörungen, die z.B. von Starkstromanlagen herrühren können, werden durch die Differenzauswertung besser unterdrückt. Die angezeigte Differenzspannung ist umso größer, je größer der Basisabstand zwischen den Suchspulen ist.

Die Absolut- und Differenzwerte können in geeigneter Weise noch digital aufbereitet und ausgewertet werden und unter Einsatz entsprechender Software auch optimal visualisiert und dargestellt werden.

Funktionsmäßig wird hierbei die Sendespule 3 mit einer niedrigen Frequenz vom Sender 2 gespeist, wodurch sich in ihrer Umgebung ein weitreichendes elektromagnetisches Wechselfeld aufbaut, das gleichzeitig die Empfangsspulen 4, 5 umfasst.
Metallteile oder andere Objekte, die in Reichweite dieses Wechselfeldes liegen, modifizieren durch Wirbelstromeffekte die in den beiden Empfangsspulen 4, 5 induzierten Spannungen. Diese Spannungsänderungen können nach Amplitude und Phase ausgewertet werden und die Details detektierter Objekte, wie Größe, Material etc. angezeigt werden. Auch eine Auswertung nach einer oder mehreren Frequenzen ist möglich.

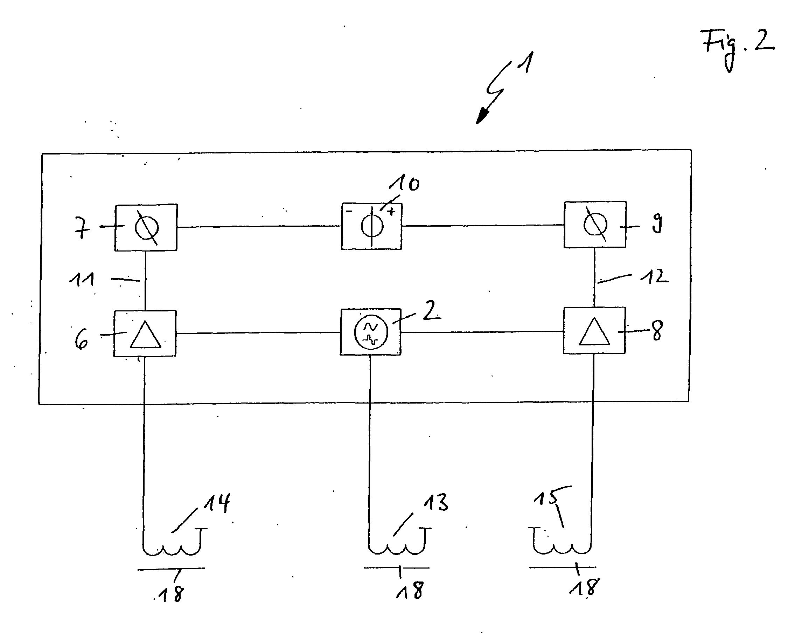

In Fig. 2 ist schematisch das Blockschaltbild einer Detektorvorrichtung 1 mit unabgestimmten Spulen 13, 14, 15 dargestellt. Die weiteren Schaltungsgruppen mit Sender 2, Verstärkern 6, 8, Anzeigeeinheiten 7, 9 und Differenzmesser 10 entsprechen denen nach Fig. 1.
Die unabgestimmten Spulen 13, 14, 15 sind im Beispiel mit einem Ferritkern 18 ausgestattet.
Bei verschiedenen Anwendungen, z.B. als Bohrlochsonde kann der dargestellte Ferritkern 18 auch entfallen.
Die Detektorvorrichtung 1 arbeitet, wie im Beispiel nach Fig. 1, als differenzierende Suchanordnung, deren Signal nicht nur die Lage des detektierten Objekts, sondern auch durch weitere Auswertung die Beschaffenheit des Objektes anzeigen kann.
Der Sender 2 wird im Beispiel symbolhaft mit einer Sinus-Wechselspannung bzw. einer bipolaren Rechteckspannung betrieben.

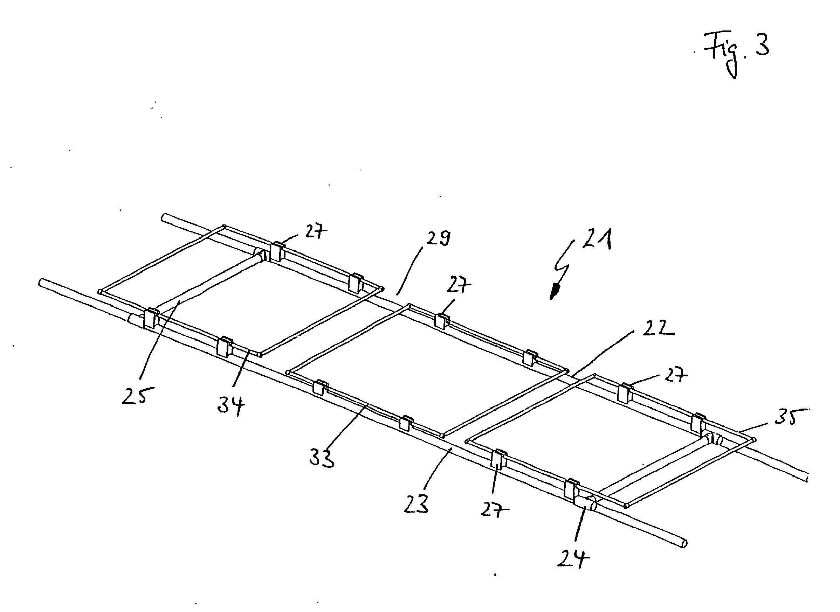

In Fig. 3 ist in perspektivischer und schematischer Darstellung eine Such- und Traganordnung 22 einer Detektoranordnung 21 dargestellt. Die Suchanordnung 22 besteht im Wesentlichen aus zwei beabstandeten Alu-Tragrohren 23, die über T-Stücke 24 und Verbindungsstreben 25 miteinander verbunden sind und somit ein robustes Traggestellt ergeben. Diese gegenständliche Detektorvorrichtung 21 entspricht der Anordnung der Spulen 3, 4, und 5 bzw. 13, 14 und 15 nach den Figuren 1 und 2.
Ein rechteckförmiger Rahmen 33 nimmt im Beispiel nach Fig. 3 die Sendespule 3 auf. Beabstandet dazu über einen Abstand 29 sind links davon bzw. rechts dazu Rahmen 34 und 35 vorgesehen, die die jeweiligen Empfangsspulen 4, 5 bzw. 14, 15 enthalten. Die Rahmen 33, 34, 35 sind über Klemmen 37, die aus Kunststoff oder Elastomer bestehen verschiebbar zueinander in Längsrichtung der Traganordnung 22 vorgesehen.

Im Beispiel nach Fig. 3 sind die außenliegenden Rahmen 34, 35 etwas höhenversetzt zum inneren Rahmen 33 angebracht, so dass auch ein Verschieben der Rahmen 34, 35 in Richtung zur Mitte und teilweise überdeckend mit dem Rahmen 33 der Sendespule möglich ist. Andererseits gestattet diese Konstruktion auch ein Auseinanderziehen der äußeren Rahmen 34 und 35 relativ zum mittleren Rahmen 33, so dass eine größere Beabstandung erreicht wird und im Sinne der Wirkungsweise eine größere Reichweite der abgestrahlten bzw. empfangenen elektromagnetischen Felder.
Mit dieser Konstruktion können daher die Basisabstände der Spulen bzw. Rahmen zueinander verändert werden und eine optimale Entkopplung von störenden Einflüssen erreicht werden.

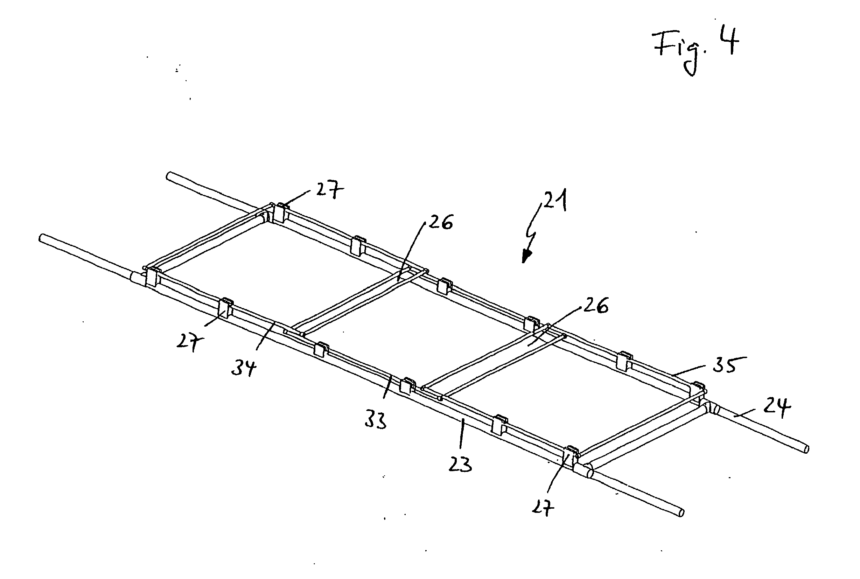

Die Fig. 4 zeigt das Beispiel nach Fig. 3, bei der die beidseitig zum mittleren Rahmen 33 vorgesehenen Rahmen 34 und 35 der Empfangsspulen parziell überlappend und damit entkoppelt bzw. vorentkoppelt zum Rahmen 33 der Sendespule bzw. 13 eingestellt sind.
Der Überdeckungs- bzw. Überlappungsgrad 26 ist daher abhängig von den örtlichen Gegebenheiten und kann vor Beginn des Ortungsverfahrens durch die Bedienperson optimal auf die Verhältnisse eingestellt werden.

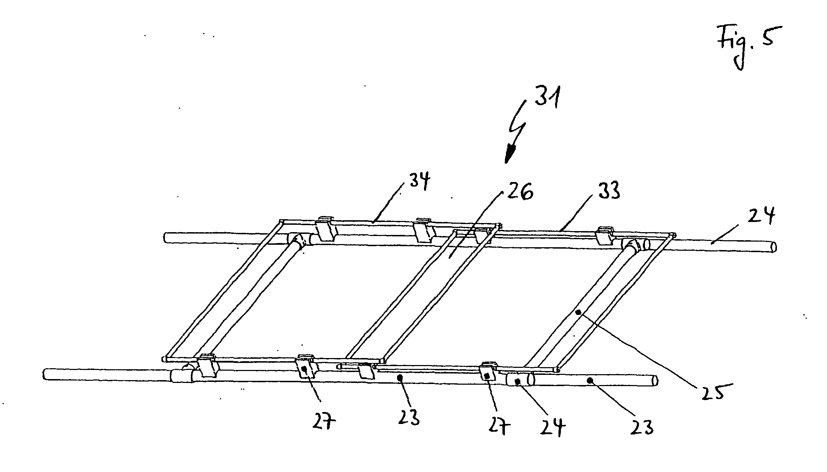

Das Beispiel nach Fig. 3 und 4 ist nur exemplarisch zu verstehen, wobei selbstverständlich die äußeren Rahmen 34, 35 wesentlich weiter beabstandet zum mittleren Rahmen 33, aber auch im Beispiel nach Fig. 5 mit größerer Überlappung 26 angeordnet werden können.

In Fig. 5 ist eine Detektorvorrichtung 31 dargestellt, die prinzipiell den gleichen Aufbau hat wie die Detektorvorrichtung 21 nach den Figuren 3, 4. Der Unterschied ist jedoch, dass die Detektorvorrichtung 31 sozusagen als Relativmesser ausgelegt ist und nur eine im Rahmen 34 vorgesehene Empfangsspule aufweist. Vergleichbar mit dem Blockschaltbild nach Fig. 2 ist daher nur ein Absolutkanal 11 vorhanden. Die Entkopplung der Rahmen 33, 34 bzw. deren Spulen wird durch die in Fig. 5 dargestellte Überlappung erreicht.

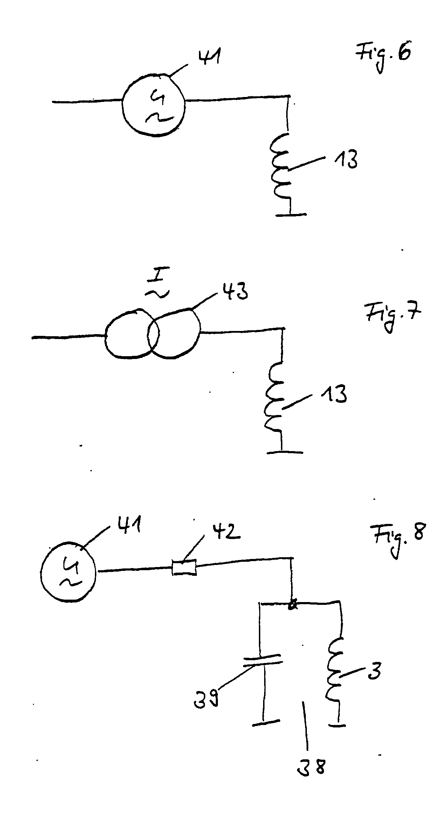

Die Figuren 6, 7 und 8 zeigen verschiedene Arten des Betriebes der entsprechenden Sendespule 3 bzw. 13.
In Fig. 6 wird eine Sendespule 13, unabgestimmt, ohne Schwingkreis über eine Wechselspannungsquelle 41 betrieben.
In Fig. 7 wird schematisch eine unabgestimmte Sendespule 13 über eine Wechselstromquelle 43 zur Abstrahlung eines elektromagnetischen Wechselfeldes angeregt.
Fig. 8 zeigt den Betrieb einer Sendespule 3 innerhalb eines Schwingkreises 38, wobei eine Kapazität 39 parallel geschaltet ist. Der Schwingkreis 38 wird hierbei über einen Vorwiderstand 42 von einer Wechselspannungsquelle 41 beaufschlagt.

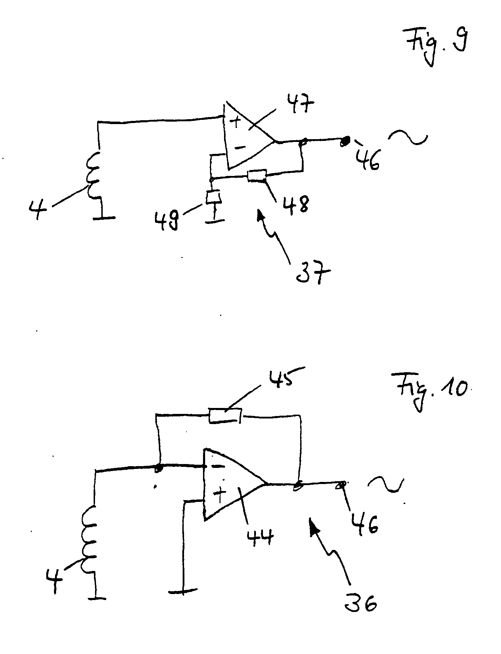

In den Figuren 9 und 10 sind Schaltungsbeispiele für den Betrieb der sekundärseitigen Empfangsspule 4 schematisch dargestellt.
Im Hinblick auf den Betrieb einer unabgestimmten Empfangsspule 4 wird die Schaltung nach Fig. 10 mit einem Stromeingang, der einen niederohmigen Eingangswiderstand aufweist, bevorzugt. Hierbei liegt die Empfangsspule 4 einerseits auf dem Minuseingangs eines Operationsverstärkers 44 und andererseits gegen Masse. Der Pluseingang des Operationsverstärkers 44 liegt auf gleichem Potential gegen Masse wie die Empfangsspule 4. Die Rückkopplung am Ausgang des Operationsverstärkers 44 erfolgt über einen Rückkopplungswiderstand 45. Am Ausgang 46 wird bei diesem Beispiel ein für das zu detektierende Objekt spezifisches Wechselsignal erhalten, das einer weiteren Auswertung zur Bestimmung der Objektdaten zugeführt wird. Die Schaltung nach Fig. 10 funktioniert daher im Sinne eines Strom-Spannungs-Wandlers.

Das Beispiel nach Fig. 9 ist als Spannungs-Wandler ausgelegt. Die unabgestimmte Empfangsspule 4 liegt einerseits auf dem Pluseingang eines Operationsverstärkers 47 und andererseits gegen Masse. Der Ausgang des Operationsverstärkers 47 ist über einen Widerstand 48 auf den Minuseingang rückgekoppelt, wobei der Minuseingang des Operationsverstärkers 47 über einen Widerstand 49 gegen Masse liegt. Das am Ausgang 46 erhaltene Signal wird ebenfalls einer weiteren Auswertung im Hinblick auf die objektspezifischen Daten zugeführt.

Bei einer weiteren Alternative, die nicht dargestellt ist, kann die niederohmige Empfangsspule mit einem Transformator gekoppelt sein, der die empfangene Wechselspannung hochtransformiert und selektiert. Die Empfangsspule liegt hierbei bevorzugt in einem LC-Kreis.

## Patentansprüche

1. Verfahren zum Orten von Objekten, insbesondere metallischen Objekten, bei dem
- auf einer Primärseite einer Detektorvorrichtung (1) ein Oszillator eine Sendespule (3; 13) anregt und die Sendespule (3; 13) ein elektromagnetisches Wechselfeld aussendet,
- auf einer Sekundärseite der Detektorvorrichtung (1) in mindestens einer Empfangsspule (4, 5; 14, 15) ein elektromagnetisches Wechselfeld induziert wird,
- die Sendespule (3; 13) und die Empfangsspule (4, 5; 14, 15) räumlich auseinanderliegend angeordnet werden,
- mindestens aus dem in der oder den Empfangsspulen (4, 5; 14, 15) induzierten Wechselfeld Signale für die Anzeige und/ oder Auswertung detektierter Objekte gewonnen werden, und
- mindestens die Empfangsspule(n) (4,5; 14, 15) der Sekundärseite unabgestimmt, insbesondere ohne Schwingkreis, betrieben wird bzw. werden,
**dadurch gekennzeichnet,**
**dass** die Detektorvorrichtung einkanalig (11) oder mehrkanalig (11, 12) betrieben wird,
**dass** die Detektion als Absolut-, Relativ- oder Differenzverfahren durchgeführt wird,
**dass** die Kopplung von Sendespule (3; 13) und Empfangsspule (4, 5; 14, 15) veränderbar durchgeführt wird, und
**dass** die Detektorvorrichtung mit einer mittleren Sendespule und mit zwei äußeren Empfangsspulen betrieben wird, wobei die Spulen im Wesentlichen koplanar zueinander angeordnet werden.

2. Verfahren nach Anspruch 1,
**dadurch gekennzeichnet,**
**dass** die Sendespule (3; 13) durch den Oszillator der Primärseite mit vorgegebener Frequenz im unabgestimmten Zustand angeregt wird und ohne Schwingkreis betrieben wird.

3. Verfahren nach Anspruch 1,
**dadurch gekennzeichnet,**
**dass** die Sendespule (3) der Primärseite in einem Schwingkreis (38) betrieben wird.

4. Verfahren nach einem der Ansprüche 1 bis 3,
**dadurch gekennzeichnet,**
**dass** das Signal der unabgestimmten Empfangsspule(n) (4, 5; 14, 15) jeweils einem Strom-Spannungwandler (36) zugeführt wird.

5. Verfahren nach einem der Ansprüche 1 bis 3,
**dadurch gekennzeichnet,**
**dass** das Signal der unabgestimmten Empfangsspule(n) (4, 5; 14, 15) jeweils einem Spannungswandler (37) zugeführt wird.

6. Verfahren nach einem der Ansprüche 1 bis 3,
**dadurch gekennzeichnet,**
**dass** das Signal der Empfangsspule auf einen Übertrager gekoppelt wird, und
**dass** mittels des Übertragers eine Selektion auf die vorgegebene Frequenz des Signales der Sendespule durchgeführt wird.

7. Verfahren nach einem der Ansprüche 1, 2 oder 4 bis 6, **dadurch gekennzeichnet,**
**dass** die Sendespule (3; 13) spannungsgesteuert (41) oder stromgesteuert (43) betrieben wird.

8. Verfahren nach einem der Ansprüche 1 bis 7,
**dadurch gekennzeichnet,**
**dass** Sendespule und Empfangsspule(n) geometrisch vorentkoppelt werden.

9. Verfahren nach Anspruch 8,
**dadurch gekennzeichnet,**
**dass** die Vorentkopplung mittels Relatiwerschiebung von Sende- und Empfangsspule(n) zueinander durchgeführt wird.

10. Verfahren nach einem der Ansprüche 1 bis 9,
**dadurch gekennzeichnet,**
**dass** die Sekundärseite der Detektorvorrichtung breitbandig betrieben wird, so dass eine weitgehend phasenstarre Kopplung zwischen Primärseite und Senkundärseite erreicht wird.

11. Verfahren nach einem der Ansprüche 1 bis 10,
**dadurch gekennzeichnet,**
**dass** die Sendespule mit kontinuierlichen oder gepulsten Wechselfeldern betrieben wird.

12. Detektorvorrichtung zur Ortung von Objekten, insbesondere metallischen Objekten,
- mit einer Primärseite, welche einen Oszillator und eine Sendespule (3; 13) aufweist,
- mit einer Sekundärseite, welche mindestens eine Empfangsspule (4, 5; 14, 15) aufweist,
- mit Mitteln (6, 7, 10) zum Erzeugen eines Detektionssignales,
insbesondere zur Durchführung des Verfahrens nach einem der Ansprüche 1 bis 11,
**dadurch gekennzeichnet,**
**dass** mindestens die Empfangsspule(n) (4, 5; 14, 15) der Sekundärseite unabgestimmt ausgelegt ist bzw. sind,
**dass** ein Vorentkopplungssystem (33, 34, 35) zwischen Sende- und Empfangsspule(n) vorgesehen ist,
**dass** die Kopplung von Sendespule und Empfangsspule(n) veränderbar ist,
**dass** Sende- und Empfangsspule(n) im Wesentlichen koplanar zueinander vorgesehen sind, und
**dass** eine mittlere Sendespule (3; 13) und zwei äußere Empfängerspulen (4, 5; 14, 15) vorgesehen sind.

13. Detektorvorrichtung nach Anspruch 12
**dadurch gekennzeichnet,**
**dass** zur Vorentkopplung eine geometrische Relativverschiebung (26, 29) zwischen Sende- und Empfangsspule(n) vorgesehen ist.

14. Detektorvorrichtung nach einem der Ansprüche 12 oder oder 13,
**dadurch gekennzeichnet,**
**dass** die Sendespule (3; 13) unabgestimmt auf die vorgegebene Frequenz des Oszillators gekoppelt ist.

15. Detektorvorrichtung nach einem der Ansprüche 12 bis 14,
**dadurch gekennzeichnet,**
**dass** ein mit der Empfangsspule (4, 5; 14, 15) gekoppelter Übertrager zur Selektion auf die vorgegebene Frequenz des Primärsignales vorgesehen ist.

16. Detektorvorrichtung nach einem der Ansprüche 12 bis 15,
**dadurch gekennzeichnet,**
**dass** jede unabgestimmte Empfangsspule (4, 5; 14, 15) mit einem nachfolgenden Strom-Spannungwandler (36) verbunden ist, und
**dass** der Ausgang der Empfangsspule (4), inbesondere direkt, mit dem Minuseingang eines Operationsverstärkers (44) des Strom-Spannungwandlers (36) verbunden ist.

17. Detektorvorrichtung nach einem der Ansprüche 12 bis 15,
**dadurch gekennzeichnet,**
**dass** der Ausgang der unabgestimmten Empfangsspule (4) auf einen Spannungwandler (37) geführt ist.

18. Detektorvorrichtung nach einem der Ansprüche 12, 13 oder 15 bis 17,
**dadurch gekennzeichnet,**
**dass** die Sendespule (3) in einem Schwingkreis (38) ausgebildet und betreibbar ist.

19. Detektorvorrichtung nach einem der Ansprüche 12 bis 18,
**dadurch gekennzeichnet,**
**dass** sie als Bohrlochsonde oder im Wesentlichen als flächige Detektorsonde (21; 31) ausgelegt ist.

20. Detektorvorrichtung nach einem der Ansprüche 12 bis 19,
**dadurch gekennzeichnet,**
**dass** sie als Absolut-, Relativ- (31) oder Differenzmesser (1) ausgelegt ist.

21. Detektorvorrichtung nach einem der Ansprüche 12 bis 20,
**dadurch gekennzeichnet,**
**dass** zur Detektion drei Kanäle vorgesehen sind.

22. Detektorvorrichtung nach Anspruch 21,
**dadurch gekennzeichnet,**
**dass** zwei Kanäle zur Erzeugung jeweils eines Absolutsignals und eine Einrichtung zur Erzeugung eines Differenzsignals vorgesehen ist.

## Claims

1. Method for locating objects, in particular metal objects, wherein
- on a primary side of a detector device (1) an oscillator excites a transmitting coil (3; 13) and the transmitting coil (3; 13) emits an electromagnetic alternating field,
- on a secondary side of the detector device (1) an electromagnetic alternating field is induced in at least one receiving coil (4, 5; 14, 15),
- the transmitting coil (3; 13) and the receiving coil (4, 5; 14, 15) are arranged lying spatially apart,
- signals for the display and / or evaluation of detected objects are obtained at least from the alternating field induced in the receiving coil(s) (4, 5; 14, 15), and
- at least the receiving coil(s) (4, 5; 14, 15) of the secondary side is / are operated untuned, in particular without an oscillatory circuit,
**characterised in that**
the detector device is operated with a single channel (11) or with multiple channels (11, 12),
the detection is carried out as an absolute, relative or differential process, the coupling of the transmitting coil (3; 13) and receiving coil (4, 5; 14, 15) is carried out variably,
and
the detector device is operated with a middle transmitting coil and with two outer receiving coils, wherein the coils are arranged substantially coplanar with each other.

2. Method according to claim 1,
**characterised in that**
the transmitting coil (3; 13) is excited by the oscillator of the primary side with predefined frequency in the untuned state and without an oscillatory circuit.

3. Method according to claim 1,
**characterised in that**
the transmitting coil (3) of the primary side is operated in an oscillatory circuit (38).

4. Method according to one of the claims 1 to 3,
**characterised in that**
the signal of the untuned receiving coil(s) (4, 5; 14, 15) is respectively fed to a current-voltage converter (36).

5. Method according to one of the claims 1 to 3,
**characterised in that**
the signal of the untuned receiving coil(s) (4, 5; 14, 15) is respectively fed to a voltage converter (37).

6. Method according to one of the claims 1 to 3,
**characterised in that**
the signal of the receiving coil is coupled to a transmitter, and
by means of the transmitter a selection of the predefined frequency of the signal of the transmitting coil is carried out.

7. Method according to one of the claims 1, 2 or 4 to 6,
**characterised in that**
the transmitting coil (3; 13) is operated with voltage control (41) or current control (43).

8. Method according to one of the claims 1 to 7,
**characterised in that**
the transmitting coil and receiving coil(s) are geometrically pre-decoupled.

9. Method according to claim 8,
**characterised in that**
the pre-decoupling is carried out by means of relative displacement of the transmitting and receiving coil(s) relative to each other.

10. Method according to one of the claims 1 to 9,
**characterised in that**
the secondary side of the detector device is operated in broadband so that an extensively phase-locked coupling is achieved between the primary side and secondary side.

11. Method according to one of the claims 1 to 10,
**characterised in that**
the transmitting coil is operated with continuous or pulsed alternating fields.

12. Detector device for locating objects, in particular metal objects,
- with a primary side which comprises an oscillator and a transmitting coil (3; 13),
- with a secondary side which comprises at least one receiving coil (4, 5; 14, 15),
- with means (6, 7, 10) for generating a detection signal, in particular for carrying out the method according to one of the claims 1 to 11,
**characterised in that**
at least the receiving coil(s) (4, 5; 14, 15) of the secondary side is / are designed to be untuned,
a pre-decoupling system (33, 34, 35) is provided between the transmitting and receiving coil(s),
the coupling of the transmitting coil and receiving coil(s) can be varied, transmitting and receiving coil(s) are provided substantially coplanar with each other, and
a middle transmitting coil (3; 13) and two outer receiving coils (4, 5; 14, 15) are provided.

13. Detector device according to claim 12,
**characterised in that**
a geometric relative displacement (26, 29) is provided between the transmitting and receiving coil(s) for pre-decoupling.

14. Detector device according to one of the claims 12 or 13,
**characterised in that**
the transmitting coil (3; 13) is coupled untuned to the predefined frequency of the oscillator.

15. Detector device according to one of the claims 12 to 14,
**characterised in that**
a transmitter coupled with the receiving coil (4, 5; 14, 15) is provided for selection of the predefined frequency of the primary signal.

16. Detector device according to one of the claims 12 to 15,
**characterised in that**
each untuned receiving coil (4, 5; 14, 15) is connected to a subsequent current-voltage converter (36), and
the output of the receiving coil (4) is connected, in particular directly, with the minus input of an operation amplifier (44) of the current-voltage converter (36).

17. Detector device according to one of the claims 12 to 15,
**characterised in that**
the output of the untuned receiving coil (4) is fed to a voltage converter (37).

18. Detector device according to one of the claims 12, 13 or 15 to 17,
**characterised in that**
the transmitting coil (3) is formed and can be operated in an oscillatory circuit (38).

19. Detector device according to one of the claims 12 to 18,
**characterised in that**
it is designed as a borehole probe or substantially as a planar detector probe (21; 31).

20. Detector device according to one of the claims 12 to 19,
**characterised in that**
it is designed as an absolute, relative (31) or differential measuring element (1).

21. Detector device according to one of the claims 12 to 20,
**characterised in that**
three channels are provided for detection.

22. Detector device according to claim 21,
**characterised in that**
two channels for respectively generating an absolute signal and a means for generating a differential signal are provided.

## Revendications

1. Procédé de localisation d'objets, en particulier d'objets métalliques, dans lequel
- sur un côté primaire d'un dispositif détecteur (1), un oscillateur d'une bobine émettrice (3; 13) est excité et la bobine émettrice (3; 13) émet un champ électromagnétique alternatif,
- sur un côté secondaire du dispositif détecteur (1), un champ électromagnétique alternatif est induit dans au moins une bobine réceptrice (4, 5 ; 14, 15),
- la bobine émettrice (3 ; 13) et la bobine réceptrice (4, 5 ; 14, 15) sont placées de façon spatialement séparée l'une de l'autre,
- des signaux pour l'affichage et/ou l'analyse d'objets détectés sont tirés au moins à partir du champ alternatif induit dans la ou les bobines réceptrices (4, 5 ; 14, 15), et
- au moins la/les bobine(s) réceptrice(s) (4, 5 ; 14, 15) du côté secondaire fonctionne(nt) sans accord, en particulier sans circuit oscillant,
***caractérisé***
***en ce que*** le dispositif détecteur fonctionne en mode monocanal (11) ou multicanaux (11, 12),
***en ce que*** la détection est conduite par un procédé absolu, relatif ou différentiel, ***en ce que*** le couplage de la bobine émettrice (3; 13) et de la bobine réceptrice (4, 5 ; 14, 15) est réalisé variable, et
***en* ce *que*** le dispositif détecteur fonctionne avec une bobine émettrice centrale et deux bobines réceptrices extérieures, les bobines étant disposées de manière sensiblement coplanaire les unes par rapport aux autres.

2. Procédé selon la revendication 1, ***caractérisé en ce que*** la bobine émettrice (3 ; 13) est excitée par l'oscillateur du côté primaire avec une fréquence prédéterminée dans l'état non accordé et fonctionne sans circuit oscillant.

3. Procédé selon la revendication 1, ***caractérisé en ce que*** la bobine émettrice (3) du côté primaire fonctionne dans un circuit oscillant (38).

4. Procédé selon l'une quelconque des revendications 1 à 3, ***caractérisé en ce que*** le signal de la/des bobines(s) réceptrice(s) non accordée(s) (4, 5 ; 14, 15) est envoyé à chaque fois à un convertisseur courant-tension (36).

5. Procédé selon l'une quelconque des revendications 1 à 3, ***caractérisé en ce que*** le signal de la/des bobines(s) réceptrice(s) non accordée(s) (4, 5 ; 14, 15) est envoyé à chaque fois à un convertisseur de tension (37).

6. Procédé selon l'une quelconque des revendications 1 à 3,
***caractérisé***
***en ce que*** le signal de la bobine réceptrice est couplé sur un translateur, et
***en ce qu***'au moyen du translateur est effectuée une sélection pour la fréquence prédéterminée du signal de la bobine émettrice.

7. Procédé selon l'une quelconque des revendications 1, 2 ou 4 à 6, ***caractérisé en ce que*** la bobine émettrice (3 ; 13) fonctionne en mode commande de tension (41) ou en mode commande de courant (43).

8. Procédé selon l'une quelconque des revendications 1 à 7, ***caractérisé en ce que*** la bobine émettrice et la/les bobine(s) réceptrice(s) sont pré-découplées géométriquement.

9. Procédé selon la revendication 8, ***caractérisé en ce que*** le pré-découplage est réalisé par déplacement relatif des bobines émettrice et réceptrice(s).

10. Procédé selon l'une quelconque des revendications 1 à 9, ***caractérisé en ce que*** le côté secondaire du dispositif détecteur fonctionne en bande large, de telle sorte qu'un couplage essentiellement rigide en phase est obtenu entre le côté primaire et le côté secondaire.

11. Procédé selon l'une quelconque des revendications 1 à 10, ***caractérisé en ce que*** la bobine émettrice fonctionne avec des champs alternatifs continus ou pulsés.

12. Dispositif de détection pour la localisation d'objets, en particulier d'objets métalliques,
- avec un côté primaire qui comprend un oscillateur et une bobine émettrice (3 ; 13),
- avec un côté secondaire qui comprend au moins une bobine réceptrice (4, 5 ; 14, 15),
- avec des moyens (6, 7, 10) pour produire un signal de détection,
en particulier pour appliquer le procédé selon l'une quelconque des revendications 1 à 11,
***caractérisé***
**en ce *qu'***au moins la/les bobine(s) réceptrice(s) (4, 5 ; 14, 15) du côté secondaire est/sont conçu(e)s non accordée(s),
***en ce qu'***un système de pré-découplage (33, 34, 35) est prévu entre la bobine émettrice et la/les bobine(s) réceptrice(s),
***en ce que*** le couplage des bobines émettrice et réceptrice(s) est modifiable,
***en ce que*** la bobine émettrice et la/les bobine(s) réceptrice(s) sont prévues essentiellement coplanaires, et
***en ce qu'***une bobine émettrice centrale (3 ; 13) et deux bobines réceptrices extérieures (4, 5 ; 14, 15) sont prévues.

13. Dispositif détecteur selon la revendication 12, ***caractérisé en ce que,*** pour le pré-découplage, il est prévu un déplacement géométrique relatif (26, 29) entre la bobine émettrice et la/les bobine(s) réceptrice(s).

14. Dispositif détecteur selon l'une quelconque des revendications 12 ou 13,
***caractérisé en ce que*** la bobine émettrice (3 ; 13) est couplée sans accord à la fréquence prédéterminée de l'oscillateur.

15. Dispositif détecteur selon l'une quelconque des revendications 12 à 14,
***caractérisé en ce qu***'un translateur couplé à la bobine réceptrice (4, 5 ; 14, 15) est prévu pour la sélection pour la fréquence prédéterminée du signal primaire.

16. Dispositif détecteur selon l'une quelconque des revendications 12 à 15,
***caractérisé en ce que*** chaque bobine réceptrice non accordée (4, 5 ; 14, 15) est reliée à un convertisseur courant-tension (36) placé après, et
***en ce que*** la sortie de la bobine réceptrice (4) est reliée, en particulier directement, à l'entrée négative d'un amplificateur opérationnel (44) du convertisseur courant-tension (36).

17. Dispositif détecteur selon l'une quelconque des revendications 12 à 15,
***caractérisé en ce que*** la sortie de la bobine réceptrice non accordée (4) est envoyée à un convertisseur de tension (37).

18. Dispositif détecteur selon l'une quelconque des revendications 12, 13 ou 15 à 17, ***caractérisé en ce que*** la bobine émettrice (3) est réalisée et peut fonctionner dans un circuit oscillant (38).

19. Dispositif détecteur selon l'une quelconque des revendications 12 à 18, ***caractérisé en ce qu'***il est conçu en sonde pour trou de forage ou essentiellement comme sonde de détecteur plate (21 ; 31).

20. Dispositif détecteur selon l'une quelconque des revendications 12 à 19, ***caractérisé en* ce *qu*'**il est conçu en mesureur absolu, relatif (31) ou différentiel (1).

21. Dispositif détecteur selon l'une quelconque des revendications 12 à 20, ***caractérisé en ce que*** trois canaux sont prévus pour la détection.

22. Dispositif détecteur selon la revendication 21, ***caractérisé en ce que*** deux canaux sont prévus pour produire chacun un signal absolu et un dispositif est prévu pour produire un signal différentiel.
